Europäisches Patentamt

European Patent Office

Office européen des brevets

(11) Numéro de publication: **0 127 540**
**B1**

## (12) FASCICULE DE BREVET EUROPEEN

(45) Date de publication du fascicule du brevet: **18.05.88**

(21) Numéro de dépôt: **84401064.5**

(22) Date de dépôt: **23.05.84**

(51) Int. Cl.⁴: **G 21 C 13/06**

(54) **Dispositif de suspension d'une structure.**

(30) Priorité: **26.05.83 FR 8308735**

(43) Date de publication de la demande:
**05.12.84 Bulletin 84/49**

(45) Mention de la délivrance du brevet:
**18.05.88 Bulletin 88/20**

(84) Etats contractants désignés:
**BE DE GB IT**

(56) Documents cités:
**FR-A-2 289 031**
**FR-A-2 437 047**
**FR-A-2 486 295**
**US-A-4 249 352**

(73) Titulaire: **COMMISSARIAT A L'ENERGIE ATOMIQUE**
**31/33, rue de la Fédération**
**F-75015 Paris (FR)**

(72) Inventeur: **Arene, Gilbert**
**"Le Clos Vert" Route de la Loubière**
**F-84120 Pertuis (FR)**
Inventeur: **Pierazzi, Luigi**
**19 Tour D'Aygosi Avenue Gambetta**
**F-13100 Aix en Provence (FR)**
Inventeur: **Renaux, Charley**
**Les Extrées**
**F-13490 Jouques (FR)**

(74) Mandataire: **Mongrédien, André et al**
**c/o BREVATOME 25, rue de Ponthieu**
**F-75008 Paris (FR)**

Courier Press, Leamington Spa, England.

EP 0 127 540 B1

**Description**

La présente invention se rapporte à un dispositif de liaison d'une structure suspendue à une structure d'accrochage.

A titre d'exemple, ce dispositif peut être appliqué à la suspension au-dessus de coeur d'un réacteur nucléaire à neutrons rapides, d'une structure de soutien des moyens permettant d'assurer la surveillance et le contrôle de coeur du réacteur, ainsi que la déflexion, vers les échangeurs, du jet de sodium sortant du coeur. L'ensemble de cette structure et des moyens qu'elle soutient sera appelé "couvercle-coeur" du réacteur.

Dans l'état actuel de la technique, ce "couvercle-coeur" est accroché, à un bouchon inclus dans le petit bouchon tournant (P.B.T.), au moyen d'une virole ajourée. L'ensemble de ce bouchon, de cette virole et du couvercle-coeur est appelé "bouchon-couvercle-coeur" (B.C.C.).

L'utilisation d'une virole de suspension présente les inconvénients suivants. Pour pouvoir résister à un séisme éventuel, on est amené à lui donner une épaisseur importante, ce qui lui confère une inertie thermique élevée qui gêne son adaptation aux variations brutales de température du sodium sortant du coeur, consécutives aux variations de régime du réacteur.

D'autre part, la masse importante de ladite virole ne pourrait être supportée directement par le P.B.T.; il a été nécessaire de la fractionner ce qui en augment le coût.

Dans le cas particulier de l'application de l'invention à un réacteur à neutrons rapides, la présente invention a précisément pour objet de réaliser la suspension du couvercle-coeur au moyen d'un dispositif de suspension ne présentant pas les inconvénients de la virole utilisée actuellement et présentant notamment une bonne rigidité transversale et une bonne souplesse radiale lui permettant de se déformer pour compenser les dilatations différentielles entre le couvercle de coeur et la dalle de fermeture de la cuve principale.

Ce dispositif peut être accroché, comme la virole actuelle, au bouchon inclus dans le P.B.T., mais sa légèreté ne rend plus nécessaire cette disposition: il est possible de l'accorrcher directement au P.B.T., ou à tout dispositif de fermeture supérieure du réacteur.

On notera toutefois que, si l'invention est particulièrement adaptée à la suspension du couvercle-coeur dans un réacteur à neutrons rapides, elle n'est pas limitée à cette application et concerne d'une manière générale un dispositif de liaison d'une structure suspendue à une structure d'accrochage, dans tous les cas où il est souhaitable que la structure suspendue présente à la fois une bonne rigidité transversale et une certaine souplesse radiale.

A cet effet, il est proposé conformément à l'invention un dispositif de liaison d'une structure suspendue à une structur d'accrochage, ce dispositif étant caractérisé en ce qu'il comprend deux séries de lames métalliques disposées l'une au-dessus de l'autre, de manière à être solidarisées respectivement à la structure suspendue et à la structure d'accrochage, chaque série de lames définissant une enveloppe convexe fermée et étant constituée de lames souples selon une direction radiale par rapport à ladite enveloppe, les deux séries de lames souples étant reliées par au moins un treillis de barres rigides comprenant des barres inclinées selon deux directions différentes dans le sens circonférentiel défini par lesdites enveloppes.

Le document EP—A1—0 128 801, beneficiant de la même date décrit et revendique un dispositif par lequel une structure repose sur un socle support, ce dispositif ayant la même structure que le dispositif de suspension selon l'invention.

De préférence, le dispositif de suspension selon l'invention comprend de plus un anneau de base solidaire de la structure suspendue et portant l'une des séries de lames souples, et un anneau support solidaire de la structure d'accrochage et portant l'autre série de lames souples. Les lames souples peuvent alors être soit fixées aux anneaux, par exemple par soudure ou par encastrement, soit découpées dans la masse même des anneaux.

Dans un mode de réalisation particulier de l'invention, le dispositif de suspension comprend au moins deux treillis reliés par un moins un anneau intermédiaire portant deux autres séries de lames définissant chacune une enveloppe convexe fermée et constituée de lames souples selon une direction radiale p'ar rapport à ladite enveloppe.

Conformément à un mode de réalisation particulier de l'invention, les enveloppes définies par chaque série de lames sont circulaires, coaxiales et, le plus souvent, sensiblement de même diamètre.

Selon deux modes de réalisation de l'invention, les barres rigides constituant le ou les treillis reliant les lames souples peuvent être soit disposées en V juxtaposés, soit disposées en X juxtaposés.

L'invention s'applique, par exemple, à un réacteur nucléaire à neutrons rapides comprenant une cuve d'axe vertical, contenant le coeur du réacteur et remplie de métal liquide, ladite cuve étant obturée par une dalle de fermeture à laquelle est suspendu un couvercle-coeur comportant des moyens de contrôle et de surveillance du coeur ainsi que de déflexion du jet de sodium sortant du coeur, caractérisé en ce que le couvercle-coeur est suspendu à la dalle au moyen d'un dispositif de liaison du type défini précédemment.

On décrira maintenant, à titre d'exemple non limitatif, différentes variantes de réalisation de l'invention en se référant aux dessins annexés dans lesquels:

— les figures 1a et 1b sont des vues en perspective représentant de façon schématique deux modes de réalisation du dispositif de suspension selon l'invention;

— les figures 2a et 2b sont des vues fragmentaires en perspective et à plus grande échelle illustrant, dans le cas du mode de réalisation de la figure 1a, deux variantes de réalisation possibles du dispositif de suspension selon l'invention, également applicables au mode de réalisation de la figure 1b;

— la figure 3 est une vue en coupe transversale schématique d'un réacteur nucléaire à neutrons rapides dont le couvercle-coeur est suspendu à la dalle de fermeture au moyen du dispositif de suspension selon l'invention; et

— la figure 4 est une vue en coupe à plus grande échelle représentant le dispositif de suspension du couvercle-coeur dans le réacteur de la figure 3.

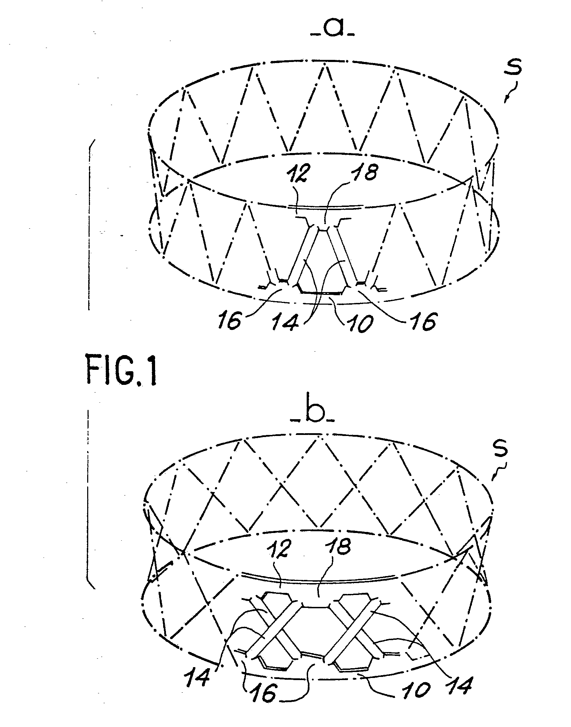

Comme l'illustrent les figures 1a et 1b, le dispositif de suspension S selon l'invention comprend un anneau de base 10 prévu pour être solidarisé directement à la structure à suspendre, un anneau support 12 pré vu pour être solidarisé directement à la structure d'accrochage et au moins un treillis de barres rigides 14 raccordé aux anneaux 10 et 12 par des lames souples 16 et 18 respectivement.

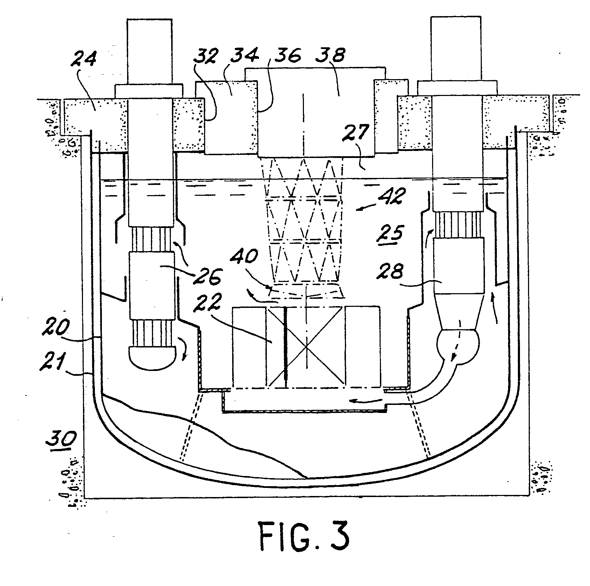

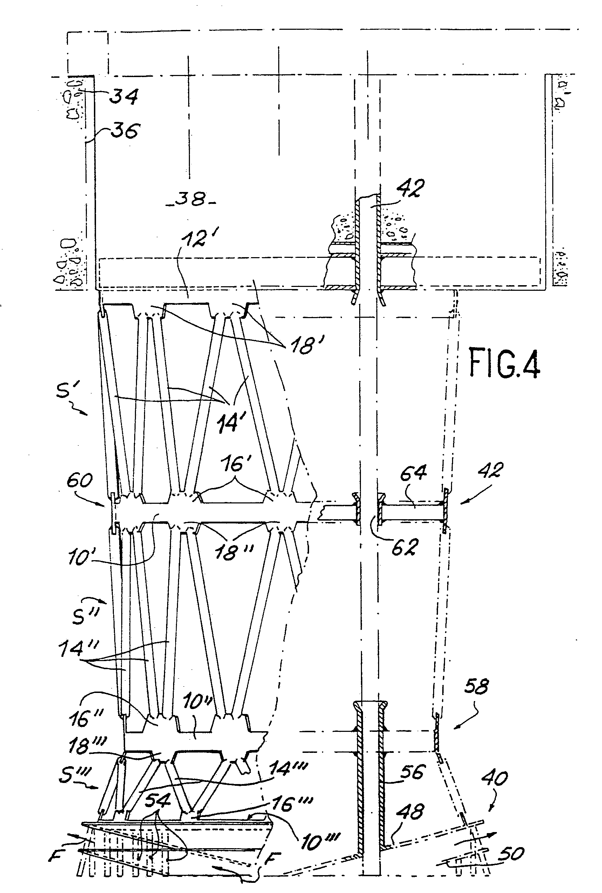

Les anneaux 10 et 12 sont des anneaux métalliques circulaires disposés coaxialement l'un au-dessus de l'autre. De préférence, ils ont sensiblement le même diamètre. Toutefois, comme on le verra ultérieurement dans l'application décrite en se référant aux figures 3 et 4, ce diamètre peut être différent lorsque la forme de la structure suspendue et les efforts auxquels elle est soumise l'exigent.

On remarquera que les anneaux 10 et 12 ne sont pas indispensables à la réalisation de l'invention. En effet, les deux séries de lames 16 et 18 peuvent être fixées directement, d'une part, à la structure suspendue et, d'autre part, à la structure d'accrochage.

D'une manière générale, les anneaux 10 et 12 ou, en leur absence, les enveloppes des lames 16 et 18, peuvent présenter une forme convexe et fermée différente d'un cercle, notamment lorsque la face supérieure de la structure suspendue est plate. Cette forme peut par exemple être polygonale, ovale, etc. . . .

Les barres 14 sont des barres métalliques rigides et rectilignes, réalisées notamment en profilé résistant bien au flambage et présentant une section en H, en croix, ronde ou tubulaire.

Les barres rigides 14 du dispositif de suspension selon l'invention sont disposées de manière à conférer à ce dispositif une bonne rigidité circonférentielle et, par conséquent, transversale. A cet effet, les barres 14 sont régulièrement réparties entre les anneaux et elles sont inclinées pour moitié dans un sens et pour moitié en sens inverse dans la direction circonférentielle définie par les anneaux 10 et 12. De façon plus précise, dans le mode de réalisation de la figure 1a, les barres rigies 14 sont disposées en V juxtaposés entre les anneaux 10 et 12 alors que, dans le mode de réalisation de la figure 1b, elles sont disposées en X juxtaposés entre ces mêmes anneaux.

Les lames souples 16 et 18 par lesquelles les barres 14 sont accrochées respectivement aux anneaux 10 et 12 sont réalisées conformément à l'invention de façon à présenter une certaine souplesse dans une direction radiale par rapport aux anneaux, tout en conférant une bonne rigidité circonférentielle au dispositif.

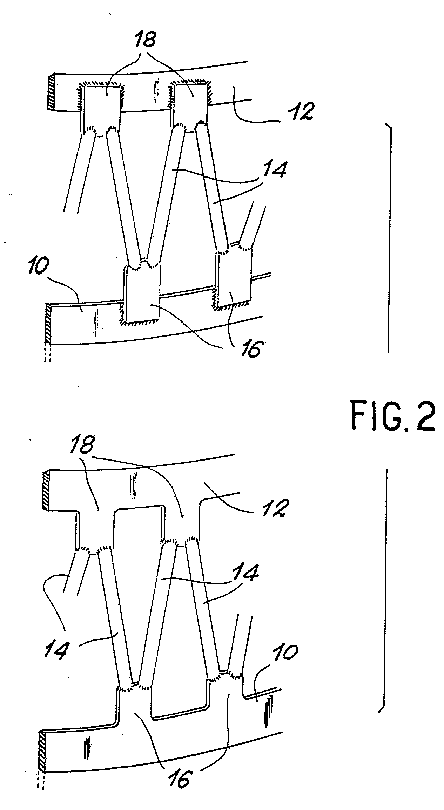

A cet effet et comme l'illustrent les figures 2a et 2b, différentes variantes de réalisation de l'invention peuvent être envisagées. Bien que les figures 2a et 2b illustrent ces variantes de réalisation dans le cas où les barres rigides 14 sont disposées en V conformément aux modes de réalisation de la figure 1a, on comprendra que ces variantes peuvent s'appliquer indifféremment au mode de réalisation de la figure 1b.

Sur la figure 2a, on a représenté le cas où les lames souples 16 et 18 sont distinctes des anneaux 10 et 12 respectivement. Dans ce cas, les lames 16 et 18 peuvent être fixées aux anneaux qui leur correspondent, par exemple par soudure ou par encastrement.

Sur la figure 2b, on a représenté le cas où les lames flexibles 16 et 18 sont découpées dans la masse de la tôle constituant les anneaux 10 et 12 respectivement.

Dans les deux cas, on voit sur les figures 2a et 2b que la fixation des barres rigides 14 sur les lames souples 16 et 18 peut être réalisée par tout moyen approprié et notamment par soudage.

Comme l'illustrent les figures 3 et 4, la structure de suspension dont différentes variantes de réalisation viennent d'être décrites est particulièrement adaptée à la suspension du couvercle-coeur d'un réacteur nucléaire à neutrons rapides.

Ainsi, on a représenté sur la figure 3 la cuve principale 20, d'axe vertical, d'un réacteur à neutrons rapides de type intégré. Rappelons que, dans ce type de réacteur, le coeur 22 du réacteur, ainsi que l'emsemble du circuit primaire, sont disposés à l'intérieur de la cuve 20, qui est obturée à son extrémité supérieure par une dalle de fermeture 24. De façon plus précise, la cuve 20 est remplié d'un métal lique 25 tel que du sodium assurant le transfert de la chaleur dégagée dans le coeur 22 du réacteur jusqu'à des échangeurs de chaleur 26, sous l'action de pompes de circulation 28. Le sodium liquide 25 est surmonté d'une atmosphère de gaz neutre 27 tel que de l'argon.

La cuve principale 20 est entourée d'une seconde cuve 21, dite cuve de sécurité et ces deux cuves sont généralement suspendues à la dalle de fermeture 24, qui repose sur une enceinte de protection en béton 30.

La dalle 24 comporte en son centre une ouverture 32 obturée par un grand bouchon tournant 34 présentant lui-même une ouverture 36 excentrée par rapport à l'ouverture 32. Cette ouverture 36 est à son tour obturée par un petit bouchon tournant 38. Cette structure bien connue permet, grâce aux rotations combinées des bouchons 34 et 38, d'avoir accès à tous les points du coeur 22 du réacteur à l'aide d'un ou plusieurs ringards de manutention (non représentés).

La dalle 24 comporte en outre, dans sa zone entourant l'ouverture 32 des passages par lesquels les composants tels que les échangeurs 26 et les pompes 28 sont suspendus.

Le réacteur nucléaire selon l'invention comporte de plus, immédiatement au-dessus du coeur 22, un couvercle-coeur 40 suspendu au petit bouchon tournant 38 par un dispositif de suspension 42 réalisé conformément à l'invention et qui va maintenant être décrit plus en détail en même temps que le couvercle-coeur 40, en se référant à la figure 4.

Afin de permettre la traversée de la dalle par les assemblages de contrôle, par les conducteurs électriques en provenance des appareillages tels que les thermocouples et par les tubes de prélèvement de sodium servant à détecter et à localiser les ruptures de gaines, le petit bouchon tournant 38 comporte des passages appropriés. Seul l'un des passages prévus pour les assemblages de contrôle a été représenté en 42 sur la figure 4.

Dans sa réalisation représentée schématiquement sur la figure 4, le couvercle-coeur 40 comprend une plaque déflectrice 48 de forme conique dont la périphérie est doublée par une plaque inférieure tronconique 50 parallèle à la plaque 48 et contribuant avec celle-ci, comme l'indiquent les flèches F sur la figure 4, à assurer l'écoulement du sodium chaud sortant du coeur du réacteur vers les échangeurs 26 (figure 3).

Les plaques 48 et 50 supportent une multitude de tubes de prélèvement 54, généralement verticaux, disposés en face de chacun des assemblages conbustibles composant le coeur 22 du réacteur. Chacun des tubes de prélèvement 54 est relié à l'aide d'un tube (non représenté) à un appareil de localisation de rupture de gaine au travers du passage (non représenté) prévu à cet effet dans le bouchon 38. Chacun des tubes de prélèvement 54 permet également le logement d'un thermocouple (non représenté) qui mesure directement la température du sodium chaud sortant du coeur du réacteur. Les thermocouples sont reliés à des appareils de mesure externes par des conducteurs électriques (non représentés) qui traversent le bouchon tournant 38 par un autre passage (non représenté).

Afin de pouvoir assurer la fonction de guidage des assemblages de contrôle précédemment mentionnés, le couvercle-coeur 40 comporte en outre des fourreaux d'axe vertical 56 qui sont disposés dans le prolongement de chacun des passages 42 traversant le petit bouchon tournant 38. Ces fourreaux 56 qui traversent avec un certain jeu la plaque déflectrice 48, sont supportés par une grille 58 constituée par des plaques métalliques verticales entrecroisées, située au-dessus des plaques déflectrices.

Le cas échéant et comme on l'a représenté sur la figure 4, un deuxième grille 60 est disposée à mi-hauteur entre la face inférieure du petit bouchon tournant 38 et la grille 58. Cette grille 60 peut également supporter des fourreaux de guidage tels que 62 disposés dans le prolongement des fourreaux 56 et des passages 42.

Dans la configuration qui vient d'être décrite ci-dessus, en plus de la suspension des plaques déflectrices 48 et 50, il est nécessaire d'assurer la suspension des grilles 58 et 60.

Conformément à l'invention, la suspension de ces trois structures au petit bouchon tournant 38 est réalisée simultanément à l'aide du dispositif de suspension 42 qui comprend à cet effet trois dispositifs S', S'' et S''' réalisés de la manière décrite précédemment en se référant aux figures 1a, 1b, 2a et 2b.

De façon plus précise, on voit sur la figure 4 que la grille 60 est suspendue à la plaque métallique inférieure du petit bouchon tournant 38 par un dispositif S' comprenant conformément à l'invention, des lames souples 18' réalisées en une seule pièce avec un anneau 12' soudé sur la plaque métallique inférieure du petit bouchon tournant, des lames souples 16' réalisées en une seule pièce avec un anneau 10' supportant les fourreaux 62 par l'intermédiaire de la grille 60 et un treillis de barres rigides 14' dont les extrémités sont fixées respectivement aux lames 16' et 18'.

Le dispositif de supportage S'' sert à suspendre la grille 58 à partir de la grille 60. Ce dispositif comprend également des lames souples 18'' réalisées en une seule pièce avec l'anneau 10' de la grille 60, des lames souples 16'' réalisées en une seule pièce avec un autre anneau 10'' servant à supporter par l'intermédiaire de plaques entretoisées les fourreaux 56 de la grille 58, et un treillis de barres rigides 14'' reliant les lames souples 16'' et 18''.

Enfin, la plaque déflectrice 48 est suspendue à l'anneau 10'' de la grille 58 par un dispositif S''' comprenant lui aussi des lames souples 18''' et 16''' réalisées en une seule pièce respectivement avec l'anneau 10'' de la grille 58 et avec un anneau 10''' soudé sur la périphérie de la plaque 48, et un treillis de barres rigides 14'''.

Comme le montre la figure 4, le diamètre du dispositif de suspension 42 diminue régulièrement et de façon relativement limitée depuis le petit bouchon tournant 38 jusqu'à la grille 58, de telle sorte que l'enveloppe des deux dispositifs S' et S'' constitue un tronc de cône dont l'angle au sommet est très faible. Au contraire, le dispositif S''' par lequel la plaque déflectrice 48 est suspendue à la grille 58 présente un diamètre qui va en augmentant de façon relativement rapide. Cette configuration permet de tenir compte de la forme tronconique de la plaque déflectrice 48.

Bien entendu, toutes les variantes de réalisation de l'invention décrites en se référant aux figures 1a, 1b, 2a, 2b peuvent être appliquées aux dispositifs S', S'' et S''' constituant le dispositif de suspension 42 par lequel le couvercle de coeur 40 est suspendu au petit bouchon tournant 38. De plus, selon la distance séparant la plaque déflectrice 48 de la dalle du réacteur, le nombre de treillis de barres rigides superposées constituant le dispositif 42 peut être soit réduit, soit augmenté.

Grâce à l'utilisation du dispositif 42 selon l'invention, la plaque déflectrice 48 ainsi que les grilles 58 et 60 suspendues au petit bouchon tournant peuvent se dilater de manière différente par rapport à celui-£ci sans entraîner de contrainte mécanique importante. En effet, les treillis de barres rigides 14 s'évasent alors plus ou moins par déformation des lames souples 16 et 18, pour compenser ces dilatations différentielles.

En revanche, lorsque le couvercle-coeur 48 est soumis à un effort horizontal par rapport à la dalle à laquelle il est suspendu, par exemple sous l'effet d'un séisme, la structure de treillis formée par les barres 14, ainsi que la bonne rigidité des lames 16 et 18 dans le sens circonférentiel permettent au dispositif de supportage selon l'invention de très bien résister à cette sollicitation transversale.

**Revendications**

1. Dispositif de liaison d'une structure suspendue à une structure d'accrochage, caractérisé en ce qu'il comprend deux séries de lames (16, 18) disposées l'une au-dessus de l'autre, de manière à être solidarisées respectivement à la structure suspendue (40) et à la structure d'accrochage (38), chaque série de lame définissant une enveloppe convexe fermée et étant constituée de lames souples selon une direction radiale par rapport à ladite enveloppe, les deux séries de lames souples étant reliées par au moins un treillis de barres rigides (14) comprenant des barres inclinées selon deux directions différentes dans le sens circonférentiel défini par lesdites enveloppes.

2. Dispositif selon la revendication 1, caractérisé en ce qu'il comprend de plus un anneau de base (10) solidaire de la structure suspendue et portant l'une (16) des séries de lames souples et un anneau support (12) solidaire de la structure d'accrochage et portant l'autre série de lames souples (18).

3. Dispositif selon la revendication 2, caractérisé en ce que les lames souples (16, 18) sont fixées aux anneaux (10, 12).

4. Dispositif selon la revendication 2, caractérisé en ce que les lames souples (16, 18) sont découpées dans la masse des anneaux (10, 12).

5. Dispositif selon l'une quelconque des revendications 1 à 4, caractérisé en ce qu'il comprend au moins deux treillis (14', 14'', 14''') reliés par au moins un anneau intermédiaire (10', 10'') portant deux autres séries de lames souples (16', 16''; 18', 18'') définissant chacune une enveloppe convexe fermée et constituée de lames souples selon une direction radiale par rapport à ladite enveloppe.

6. Dispositif selon l'une quelconque des revendications 1 à 5, caractérisé en ce que les enveloppes définies par chaque série de lames sont circulaires et coaxiales.

7. Dispositif selon la revendication 6, caractérisé en ce que les enveloppes définies par chaque série de lames sont sensiblement de même diamètre.

8. Dispositif selon l'une quelconque des revendications 1 à 5, caractérisé en ce que les barres (14) constituant chaque treillis sont disposées en V.

9. Dispositif selon l'une quelconque des revendications 1 à 5, caractérisé en ce que les barres (14) constituant chaque treillis sont disposées en X.

10. Réacteur nucléaire à neutrons rapides comprenant une cuve (20) d'axe vertical, contenant le coeur (22) du réacteur et remplie de métal liquide (25) ladite cuve étant obturée par une dalle de fermeture (24) à laquelle est suspendu un couvercle-coeur (40) comportant des moyens de contrôle et de surveillance du coeur, ainsi que de déflexion du jet de sodium sortant du coeur, caractérisé en ce que le couvercle-coeur est suspendu à la dalle au moyen d'un dispositif (42) selon l'une quelconque des revendications précédentes.

**Patentansprüche**

1. Vorrichtung zum Verbinden einer aufgehängten Struktur an einer Befestigungsstruktur, dadurch gekennzeichnet, daß sie zwei Reihen von Platten (16, 18) aufweist, die übereinander derart angeordnet sind, daß sie mit der aufgehängten Struktur (40) bzw. der Befestigungsstruktur (38) fest verbunden sind, wobei jede Plattenreihe eine geschlossene, konvexe Umhüllung festlegt und von in einer radialen Richtung in Bezug auf die genannte Umhüllung nachgiebigen Platten gebildet ist, wobei die zwei Reihen von nachgiebigen Platten mittels wenigstens eines Gitters von steifen Stangen (14) verbunden sind, welche Stangen umfassen, die in dem von den genannten Umhüllungen festgelegten Umfangssinn in zwei unterschiedlichen Richtungen geneigt sind.

2. Vorrichtung nach Anspruch 1, dadurch gekennzeichnet, daß sie ferner einen Basisring (10), der an der aufgehängten Struktur befestigt ist und eine (16) der Reihen von nachgiebigen Platten trägt, und einen Stützring (12) aufweist, der an der Befestigungsstruktur befestigt ist und die andere Reihe von nachgiebigen Platten (18) trägt.

3. Vorrichtung nach Anspruch 2, dadurch gekennzeichnet, daß die nachgiebigen Platten (16, 18) an den Ringen (10, 12) befestigt sind.

4. Vorrichtung nach Anspruch 2, dadurch gekennzeichnet, daß die nachgiebigen Platten (16, 18) aus der Gesamtheit der Ringe (10, 12) ausgeschnitten sind.

5. Vorrichtung nach einem der Ansprüche 1 bis 4, dadurch gekennzeichnet, daß sie wenigstens zwei Gitter (14', 14'', 14''') aufweist, die über wenigstens einen Zwischenring (10', 10'') verbunden sind, der zwei weitere Reihen von nachgiebigen Platten (16', 16''; 18', 18'') trägt, von denen jede eine geschlossene, konvexe Umhüllung festlegt und von einer in Bezug auf die genannte Umhüllung radialen Richtung nachgiebigen Platten gebildet ist.

6. Vorrichtung nach einem der Ansprüche 1 bis 5, dadurch gekennzeichnet, daß die von jeder Reihe von Platten festgelegten Umhüllungen kreisförmig und koaxial sind.

7. Vorrichtung nach Anspruch 6, dadurch gekennzeichnet, daß die von jeder Reihe von Platten festgelegten Umhüllungen im wesentlichen den gleichen Durchmesser aufweisen.

8. Vorrichtung nach einem der Ansprüche 1 bis 5, dadurch gekennzeichnet, daß die jedes Gitter bildenden Stangen (14) als V angeordnet sind.

9. Vorrichtung nach einem der Ansprüche 1 bis 5, dadurch gekennzeichnet, daß die jedes Gitter bildenden Stangen (14) als X angeordnet sind.

10. Schneller Kernreaktor mit einem Behälter (20) mit vertikaler Achse, der den Reaktorkern (22) enthält und mit Flüssigmetall (25) gefüllt ist, wobei der Behälter mit einer Abschlußplatte (24) abgedeckt ist, an der ein Kerndeckel (40) aufgehängt ist, der Steuer- und Überwachungseinrichtungen für den Kern sowie Ablenkmittel ür den aus dem Kern austretenden Natriumstrahl umfaßt, dadurch gekennzeichnet, daß der Kerndeckel an der Platte mittels einer Vorrichtung (42) nach einem der vorhergehenden Ansprüche aufgehänt ist.

**Claims**

1. Device for connecting a suspended structure to an attachment structure, characterized in that it comprises two rows of superimposed metal plates (16, 18) enabling them to be respectively joined to the suspended structure (40) and to the attachment structure (38), each row of plates defining a sealed convex envelope, and being constituted by flexible plates in a direction radial relative to said envelope, the two rows of flexible plates being connected by at least one lattice of rigid bars (14) comprising bars inclined in two different directions in the circumferential sense defined by the said envelopes.

2. Device according to claim 1, characterized in that it also comprises a base ring (10) integral with the suspended structure and carrying one (16) of the rows of flexible plates and a support ring (12) integral with the attachment structure and carrying the other rwo of flexible plates (18).

3. Device according to claim 2, characterized in that the flexible plates (16, 18) are fixed to the rings (10, 12).

4. Device according to claim 2, characterized in that the flexible plates (16, 18) are cut into the mass of the rings (10, 12).

5. Device according to any one of the claims 1 to 4, characterized in that it comprises at least two lattices (14', 14'', 14''') connected by at least one intermediate ring (10', 10'') carrying two other rows of flexible plates (16', 16''; 18', 18''), each defining a closed convex envelope and constituted by flexible plates in a direction radial with respect to the envelope.

6. Device according to any one of the claims 1 to 5, characterized in that the envelopes defined by each row of plates are circular and coaxial.

7. Device according to claim 6, characterized in that the envelopes defined by each row of plates are substantially of the same diameter.

8. Device according to any one of the claims 1 to 5, characterized in that the bars (14) constituting each lattice are arranged in V form.

9. Device according to claim 1, characterized in that the bars (14) constituting each lattice are arranged in X form.

10. Fast neutron nuclear reactor incorporating a vertically axed vessel (20) containing the reactor core (22) and filled with liquid metal (25), said vessel being closed by a sealing slab (24) on which is suspended a core cover (40) having means for inspecting and monitoring the core, as well as the deflection of the sodium jet leaving the core, characterized in that the core cover is suspended on the slab by means of a device (42) according to any one of the preceding claims.

0 127 540

_a_

12  18

16  14  10  16

FIG.1

_b_

12  18

14  16  10  14

1

FIG. 2

FIG. 3

FIG.4